# EUROPÄISCHE PATENTSCHRIFT

(11) **EP 0 980 658 B1**
(45) Veröffentlichungstag und Bekanntmachung des Hinweises auf die Patenterteilung: **19.05.2004**
(21) Anmeldenummer: 98250292.4
(22) Anmeldetag: 17.08.1998
(51) Int. Cl.: A47B 83/02, A47B 19/00

(54) **Computergerechtes Arbeitsstehpult und Verfahren zur Realisierung einer ergonomischen Arbeitshaltung**
Computer suitable high desk and method of achievindg an ergonomic work position
Pupitre de lecture adapté pour ordinateur et procédé permettant d'obtenir une position de travail ergonomique

(43) Veröffentlichungstag der Anmeldung: 23.02.2000
(73) Patentinhaber: Kern, Beatrice, 10625 Berlin (DE)
(72) Erfinder: Kern, Beatrice, 10625 Berlin (DE)
(74) Vertreter: Hengelhaupt, Jürgen, Dipl.-Ing.

(56) Entgegenhaltungen:
- EP-A- 0 252 274
- AT-B- 387 314
- DE-A- 4 104 462

## Beschreibung

Die Erfindung betrifft ein computergerechtes Arbeitsstehpult sowie ein Verfahren zur Realisierung einer ergonomischen Arbeitshaltung und ist anwendbar beispielsweise zur Gestaltung von ergonomischen Arbeitsplätzen. Die Erfindung beschreibt insbesondere ein als rückengerechtes Stehpult ausgebildetes Arbeitspult, an dem drei ergonomische Arbeitsweisen möglich sind.

Es ist seit langem bekannt, daß, im Gegensatz zu den im Sitzen ausgeübten Tätigkeiten, beispielsweise am Schreibtisch, bestimmte Tätigkeiten im Stehen zu realisieren oder zu verrichten sind. Hierzu werden sogenannte Steh- oder Rednerpulte verwendet, welche über ein Untergestell und eine Arbeitsplatte verfügen. Im Bürobereich stehen diese Pulte meist nur als Ergänzung zum Schreibtisch zur Verfügung.

Ein derartiges Pult ist beschrieben in der DE 39 30 466 A1.

Weiterhin ist aus der AT 387 314 B ein Tisch mit daran angeordneter Sitzstütze und Kniestützen bekannt, welcher eine durch sich kreuzende und gelenkig miteinander verbundene Beine oder Beinpaare abgestützte Platte aufweist.

Die Sitzstütze ist mit ihrem einen Ende am unteren Schenkel eines der Beine oder der Beinpaare angelenkt und in ihrem mittleren Bereich am unteren Schenkel des anderen Beines oder Beinpaares abgestützt, wobei an ihrem anderen Ende eine Sitzplatte vorgesehen ist. Eine stehende Arbeitshaltung ist bei dieser Lösung nicht vorgesehen.

Nachteilig an den bekannten Lösungen ist, daß diese nicht computergerecht gestaltet sind und keine ausreichende Standunterstützung für eine Langzeitnutzung, beispielsweise eines vollen Arbeitstages bieten.

Der Erfindung liegt daher die Aufgabe zugrunde, ein computergerechtes Arbeitsstehpult und ein Verfahren zu schaffen, mit welchen eine dynamische, ergonomische Arbeitsweise realisiert werden kann und durch welche Rückenbeschwerden infolge von Muskelverkürzungen, Abnutzung der Gelenke und entzündliche Reaktionen am Sehnen-/Bänderapparat, die durch mehrstündige sitzende Tätigkeit entstehen können, vermeidbar sind.

Es ist weiterhin Aufgabe der Erfindung, eine effektive und preisgerechte Herstellung sowie einfache Bedienung zur Realisierung verschiedener Positionen des Arbeitsstehpultes zu ermöglichen und vielseitige Nutzungsanwendungen zu erschließen.

Diese Aufgabe wird erfindungsgemäß gelöst durch die Merkmale im kennzeichnenden Teil der Ansprüche 1 und 20 im Zusammenwirken mit den Merkmalen im Oberbegriff. Zweckmäßige Ausgestaltungen der Erfindung sind in den Unteransprüchen enthalten.

Ein besonderer Vorteil der Erfindung besteht darin, daß die aus einseitiger Sitzbelastung resultierenden Beschwerden gemindert werden können, indem - die Arbeitshaltung im Verlaufe des Arbeitsprozesses durch aufeinanderfolgende Kombination der Positionen
- Stand mit Stand/Spielbeinpose
- Knieunterstützung mit Gewichtsabgabe nach vorn unten
- Standunterstützung über die Tuber Ischiadici (Sitzbeinhöcker) mit Gewichtsabgabe nach hinten unten dynamisch verändert wird.

Ermüdung der Muskulatur und des Bänderapparates stehen im Zusammenhang zu Muskelverkürzungen, die wiederum Fehlhaltungen hervorrufen. Überbeanspruchte Gelenke, z. B. durch mehrstündiges Sitzen am Computer, führen durch unflexible Arbeitshaltung zu entzündlichen Reaktionen der Sehnen (Tendomyosen). Krankschreibungen bzw. aufwendige Behandlungen ergeben ein Kostenvolumen, welches durch einen optimal gestalteten Arbeitsplatz reduziert werden könnte.

Einfach und preisgerecht herstellbar und problemlos zu bedienen ist ein Arbeitsstehpult, bei welchem das Untergestell aus mindestens zwei Stützen mit daran angeordneten Stützbeinen besteht, wobei die Stützbeine Aufnahmevorrichtungen für Arretierungsmittel eines aus mindestens zwei Bügeln und mindestens einem Körperstützelement gebildeten verstellbaren Schlittens aufweisen. Ein derartiges Arbeitsstehpult stellt eine Alternative zur klassischen Büroausstattung Schreibtisch/Stuhl dar.

Die Erfindung soll nachstehend anhand von zumindest teilweise in den Figuren dargestellten Ausführungsbeispielen näher erläutert werden.

Es zeigen:
- Fig.1: eine Seitenansicht des Arbeitsstehpultes mit verschiedenen angedeuteten Positionen des Schlittens mit Körperstützelement,
- Fig. 2: eine Draufsicht auf das Arbeitsstehpult gemäß Fig. 1 ohne Kasten/Arbeitsplatte,
- Fig. 3: eine Ansicht des Arbeitsstehpultes von vorn,
- Fig. 4: ein abnehmbarer Rückenstützbügel.

Nachfolgend soll der Aufbau und die Konstruktion des Arbeitsstehpultes im Detail beschrieben werden.

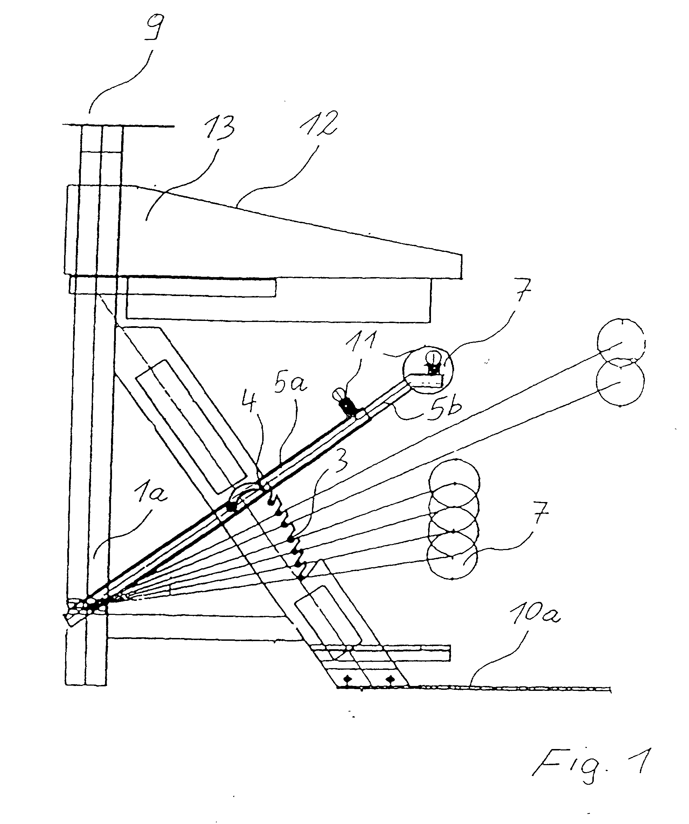

Wie aus Fig. 1 zu ersehen ist, ist der hölzerne Kasten 13 in der Aufsicht trapezförmig ausgebildet und hat im vorliegenden Ausführungsbeispiel eine Breite von 1,40 Meter, wobei sich die Arbeitsplatte 12 nach vorn verkürzt und dort nur 1,05 Meter breit ist. Die Abschlußkante vorn ist konkav geformt. Die bogenförmige Aussparung ermöglicht im Stand eine optimale Annäherung an das Arbeitsstehpult, ohne daß Becken oder Bauch unangenehmem Druck ausgesetzt sind. Unterhalb des Kastens 13 sind drei Schubkästen angebracht, wobei einer nach vorn (Maße 50x40 cm), die anderen beiden rechts und links zur Seite zu öffnen sind. Es liegt im Sinn der Konzeption, der dynamischen Arbeitshaltung vielfältige Bewegungsabläufe zu ermöglichen, so daß bei der Benutzung ein Höchstmaß an Variabilität entsteht.

Die angeschrägte Arbeitsplatte 12 kann auf horizontaler Ebene eingestellt werden, das Öffnen ab der Horizontalen wird mittels Druckfedern erleichtert. Unterhalb der Arbeitsplatte 12 befindet sich ein Hohlraum zur Ablage von Papieren und zur Unterbringung des Computers. Die Tiefe des Kastens 13 beträgt 90 cm. Der hintere Bereich ist 23 cm hoch und zwar auf eine Länge von 13 cm, die nach unten schräg verlaufende Arbeitsplatte 12 schließt sich daran an.

Der horizontal hintere Schubkasten dient der Auflagefixierung auf die zwei Stützen 1a, 1b, die vertikal in einem Abstand von 80 cm zueinander stehen.

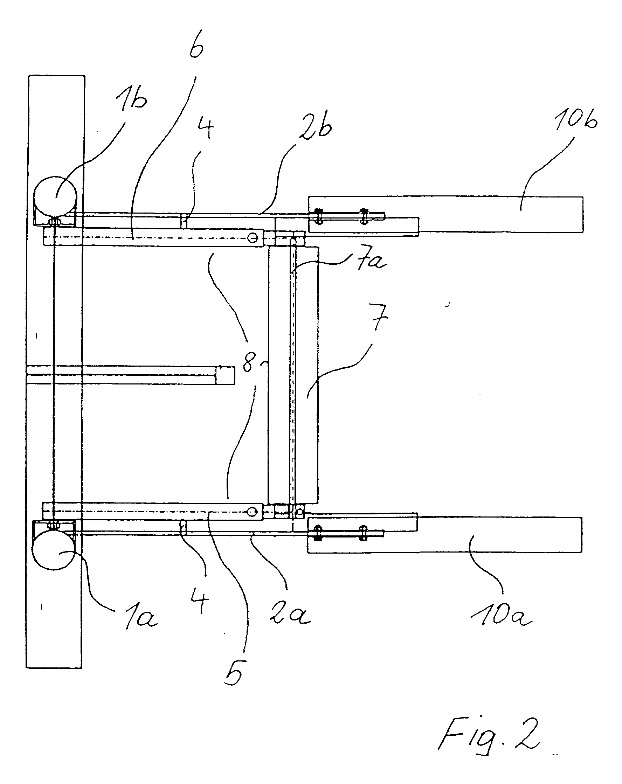

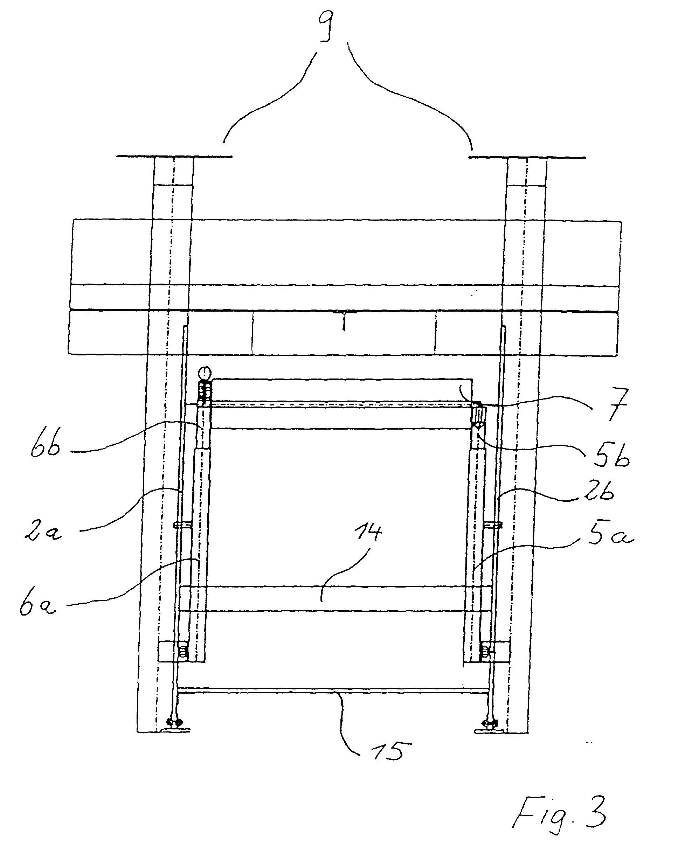

Nachfolgend wird unter Einbeziehung der Fig. 2 und 3 das Aufstecksystem sowie das Untergestell mit dem Stellmechanismus beschrieben.

Die als Hohlprofile, beispielsweise Rohre ausgebildeten Stützen 1a,1b ragen 12-20 cm über die horizontale Abschlußkante hinaus. Hieraus resultiert die Möglichkeit, mittels eines Aufstecksystems zwei einzelne Ablageplatten 9 oder ein durchgehendes Regal anzubringen. Das Aufstecksystem ist auf mindestens einer Seite höhenverstellbar und bietet die Möglichkeit für eine größengerechte Aufstellung eines Monitors. Sofern ein als Tower oder Minitower ausgebildeter Computer Verwendung findet, kann dieser mittels einer Zusatzhalterung am Arbeitsstehpult befestigt werden. Auf der zweiten Ablageplatte 9 kann beispielsweise ein Drucker aufgestellt werden.

Das Untergestell besteht aus einer stabilen Verbindung der beiden Stützen 1a,1b mit zwei nach vorn laufenden Stützbeinen 2a,2b. Die starr ausgebildeten Stützbeine 2a,2b sind im vorliegenden Ausführungsbeispiel 1,16 Meter lang und sind an der Seitenebene abgestuft ausgespart. Die Abstufung in Form der Aussparungen 3 ermöglicht eine Winkelverstellung des Schlittens 8, der im unteren Bereich der Stützen 1a,1b verankert ist. Die Stufeneinstellung ist im Radius von 30° möglich. Die Stützen 1a,1b und die Stützbeine 2a,2b sind in der Höhe von 14 cm durch ein Vierkantprofil hinten, seitlich und vorn miteinander verbunden. Das vordere, die beiden Stützbeine 2a,2b verbindende Vierkantprofil ist, wie in Fig. 3 zu ersehen, mit einem Holzbrett (Maße: 30 cm tief, 78 cm breit) versehen, das als Fußablage 14 für den Stand dient.

Der Schlitten 8 kann unter dem Arbeitsstehpult versenkt werden, so daß er beim Stand nicht im Weg ist. Wie in Fig. 1 stilisiert dargestellt, ist im vorliegenden Ausführungsbeispiel hierzu die obere Aussparung 3 tiefer und teilkreisförmig ausgebildet. Durch ein Arretieren des Schlittens 8 in dieser Aussparung wird die Versenkung unter den Arbeitsbereich erwirkt. Der Klappmechanismus nach vorn gewährt über das Einstellen der Bügellänge das unterstützte Knien oder den unterstützten Stand. Der ausziehbare Bügelmechanismus ist am Ende mit einer Polsterrolle 7 ausgestattet, die nach oben geöffnet werden kann, um das unterstützte Stehen bzw. dessen Einstieg zu vereinfachen. Die Längenverstellung der als Teleskopstangen ausgebildeten und Außenteile 5a,6a sowie Innenteile 5b,6b aufweisenden Bügel 5,6 sowie das Öffnen bzw. Abklappen der Polsterrolle 7 sind durch Schnappbolzen 11 mit Zugfedermechanismen möglich. Die Innenteile 5b, 6b sind, wie in Fig. 1 dargestellt, an ihrem oberen Ende abgewinkelt ausgebildet. Als Kippsicherung, also um dem abgegebenen Gewicht des unterstützten Standes entgegenzuwirken, befinden sich am Ende der vorderen Stützbeine 2a,2b zwei als Flachstahlleisten ausgebildete Kippsicherungsleisten 10a,10b. Diese sind gleich dem Kasten 13 und dem Schlitten 8 mit integrierten Bügeln 5,6 sowie Polsterrolle 7 frei montierbar und können bei Transport/Umzug abgenommen werden.

An den Stützen 1a,1b sind die Stützbeine 2a,2b im oberen Bereich starr und die Außenteile 5a,6a im unteren Bereich bewegbar angeordnet. Zwischen den Stützbeinen 2a,2b ist eine Querstrebe 15 angeordnet.

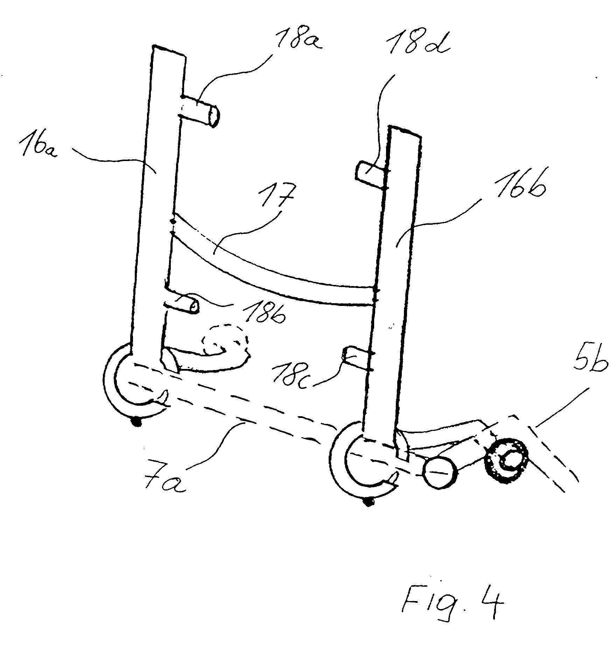

Ergänzend ist es möglich, über der Polsterrolle 7 einen Rückenstützbügel anzuordnen. Eine Realisierungsvariante eines derartigen Rückenstützbügels, welcher an der Achse 7a der Polsterrolle 7 befestigt ist, ist in Fig. 4 dargestellt. Der Rückenstützbügel besteht aus zwei Bügelstangen 16a,16b, welche durch eine Verbindungsstange 17 miteinander verbunden sind. Die Verbindungsstange 17 ist konvex nach hinten geformt, damit die an dem Halterungsmechanismus 18a,18b,18c,18d befestigbaren Rückenpolsterrollen nicht blockiert werden können.

Der Halterungsmechanismus 18a,18b,18c,18d wird durch Halbrohre realisiert, in welche die Achsen der Rückenpolsterrollen eingeklinkt und arretiert werden. Der Arretierungs-/Öffnungsmechanismus befindet sich an der dem Arbeitsstehpult zugewandten Seite, um eine Sicherung gegen versehentliches Offenlassen der Arretierung zu realisieren.

Im weiteren werden die Verfahrensschritte kurz erläutert.

Bei dem Arbeitsstehpult handelt es sich um einen rückengerechten Arbeitsplatz, bei dem ein größtmöglicher Spielraum an Beweglichkeit gegeben ist. Drei Positionen können in unterschiedlicher Reihenfolge miteinander kombiniert werden:
A) Stand mit Stand/Spielbeinpose
B) Knieunterstützung mit Gewichtsabgabe nach vorn unten
C) Standunterstützung über die Tuber Ischiadici (Sitzbeinhöcker) mit Gewichtsabgabe nach hinten vorn.

Durch eine dynamische Arbeitshaltung können Fehlentwicklungen, die sich typischerweise aus langandauernden Sitzpositionen ergeben, wie z. B. Muskelverkürzungen, Gelenküberbeanspruchung und Abnutzung sowie allgemeine Ermüdung der Gesamtkonstitution, verhindert werden. Im nachfolgenden Ausführungsbeispiel werden Physio-ergonomische Aspekte näher betrachtet.

Unterstützend für die Arbeit im Stand ist eine Fußablage 14 in Höhe von 8 cm montiert, die eine Standbein-Spielbein-Position ermöglicht. Durch die Ablage eines Fußes können wechselseitig die Hüftgelenke entlastet werden. Ergonomische Untersuchungen haben gezeigt, daß sich die aufrechte Standposition belebend auf Rücken- und Beinmuskulatur auswirkt. Durch die exakte Ausrichtung der Höhenverstellung auf die Körperlänge des Benutzers, sowie durch die schrägansteigende Arbeitsplatte 12 (Winkel 10°) wird eine durch Ermüdung bedingte Rundrückenhaltung verhindert. Die natürliche Haltungskyphose im BWS-Bereich bleibt erhalten, ohne daß die langen Rückenstrecker überdehnt werden.

Die empfohlene Arbeitszeit für die Standhaltung beträgt 15-20 min. Da Becken- und Beinmuskulatur schneller ermüden, empfiehlt es sich, die Arbeitshaltung öfter zu wechseln und das Körpergewicht über die Knie nach vorn unten (Kniestütze) oder durch Unterstützung des Beckens (Standhilfe) nach hinten unten abzugeben.

Durch den vorklappbaren Schlitten 8 kann der Abstand zum Arbeitspult und durch die Längenverstellung der Bügel 5,6 die Höhe der Knieauflage exakt eingestellt werden. Sinn ist es, bei längerem Arbeiten eine Gewichtsabgabe nach vorn unten zu ermöglichen, so daß die Muskulatur der Beine und des Beckens entlastet wird. Gleichzeitig wird eine physiologische Kippstellung um 60° unterstützt, so daß die Wirbelsäule in ihrer natürlichen LWS-Lordose, BWS-Kyphose und HWS-Lordose ohne größeren Aufwand an Muskelkraft gehalten werden kann. Die empfohlene Arbeitszeit in Kniestützstellung ist 30-45 min.

Bei längerem Arbeiten und um die Kniestrukturen bei Benutzung der Knieablage nicht überzustrapazieren gibt es die Möglichkeit des unterstützten Stehens. Dazu stellt man über den Schlitten 8 den Abstand zum Arbeitsstehpult ein und fährt die Bügel 5,6 mit der Polsterrolle 7 soweit aus, daß man die beiden Tuber Ischiadici (Sitzbeinhöcker) gerade noch unterstützt und die Knie leicht gebeugt sind. Somit wird das Gewicht nach unten hinten abgegeben, so daß der Oberkörper über die Hüftgelenke leicht nach vorne geneigt werden kann, ohne die Wirbelsäule zu beugen. Diese Arbeitshaltung stärkt die Rückenmuskulatur und ermöglicht einen ergonomischen Einsatz der Gelenke. Gleichzeitig kann durch Auflage der Unterarme Gewicht nach vorn zur Arbeitsplatte 12 abgegeben werden, wodurch die Brustwirbelsäule entlastet und eine Haltungsstabilisierung erreicht wird.

Die empfohlene Arbeitszeit für den unterstützten Stand ist 30-90 min.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, im Rahmen der bestehenden Ansprüche.

### Bezugszeichenliste

- 1a: Stütze
- 1b: Stütze
- 2a: Stützbein
- 2b: Stützbein
- 3: Aufnahmevorrichtung
- 4: Arretierungsmitel
- 5: Bügel
- 5a: Außenteil
- 5b: Innenteil
- 6: Bügel
- 6a: Außenteil
- 6b: Innenteil
- 7: Körperstützelement
- 8: 7a
- 8: Schlitten
- 9: Ablageplatten
- 10a: Kippsicherungsleiste
- 10b: Kippsicherungsleiste
- 11: Scnappbolzen
- 12: Arbeitsplatte
- 13: Kasten
- 14: Fußablage
- 15: Querstrebe
- 16a: Bügelstange
- 16b: Bügelstange
- 17: Verbindungsstange
- 18a: Halterungsmechanismus
- 18b: Halterungsmechanismus
- 18c: Halterungsmechanismus
- 18d: Halterungsmechanismus

## Patentansprüche

1. Arbeitsstehpult, bestehend aus einem Untergestell mit mindestens zwei Stützen (1a, 1b) mit daran angeordneten Stützbeinen (2a, 2b) und einer an dem Untergestell angeordneten Arbeitsplatte (12), wobei die Stützbeine (2a,2b) Aufnahmevorrichtungen (3) für Arretierungsmittel (4) eines aus mindestens zwei Bügeln (5,6) und mindestens einem Körperstützelement (7) zur Stand- oder Knieunterstützung gebildeten verstellbaren Schlittens (8) aufweisen und die Bügel (5,6) als auszieh- und einschiebbare Teleskopstangen mit Außenteil (5a,6a) und Innenteil (5b,6b) ausgebildet sind und zwischen den Innenteilen (5b,6b) der Bügel (5,6) das Körperstützelement (7) angeordnet ist.

2. Arbeitsstehpult nach Anspruch 1,
**dadurch gekennzeichnet, daß**
die Stützen (1a,1b) Hohlprofile sind und an den Stützen (1a,1b) Ablageplatten (9) und/oder mindestens ein durchgehendes Regal angeordnet ist/sind und die Befestigung der Ablageplatten (9) und/oder des Regals mittels eines Aufstecksystems erfolgt.

3. Arbeitsstehpult nach Anspruch 1,
**dadurch gekennzeichnet, daß**
die Aufnahmevorrichtungen (3) Aussparungen sind und das Körperstützelement (7) als Polsterrolle ausgebildet und mit einem abnehmbaren Rückenstützbügel komplettierbar ist, wobei das Körperstützelement (7) abnehmbar oder abklappbar an den Innenteilen (5b,6b) befestigt ist und die Innenteile (5b,6b) an ihrem oberen Ende abgewinkelt ausgebildet sind.

4. Arbeitsstehpult nach Anspruch 1,
**dadurch gekennzeichnet, daß**
an den Stützen (1a,1b) die Stützbeine (2a,2b) im oberen Bereich starr und die Außenteile (5a,6a) im unterem Bereich winkelverstellbar bewegbar angeordnet sind und an den Stützbeinen (2a,2b) als Flachstahlleisten ausgebildete Kippsicherungsleisten (10a,10b) angeordnet sind.

5. Arbeitsstehpult nach Anspruch 3,
**dadurch gekennzeichnet, daß**
zur Arretierung der Innenteile (5b,6b) an den Außenteilen (5a,6a) und/oder des Körperstützelementes (7) an den Innenteilen (5b,6b) federbelastete Schnappbolzen (11) angeordnet sind.

6. Arbeitsstehpult nach Anspruch 1,
**dadurch gekennzeichnet, daß**
zwischen den Stützbeinen (2a,2b) oder den Stützen (1a,1b) eine Querstrebe (15) angeordnet ist und die Arbeitsplatte (12) nach oben einen trapezförmig ausgebildeten Kasten (13) abschließt und an ihrer den Stützen (1a,1b) zugewandten Seite breiter ausgebildet ist als an der den Stützen (1a,1b) entgegensetzten Seite.

7. Arbeitsstehpult nach Anspruch 3,
**dadurch gekennzeichnet, daß**
die Arbeitsplatte (12) vorn an der den Stützen (1a,1b) abgewandten Seite konkav geformt ist derart, daß eine bogenförmige Aussparung gebildet wird.

8. Arbeitsstehpult nach Anspruch 6,
**dadurch gekennzeichnet, daß**
in dem und/oder unterhalb des Kastens (13) Schubkästen angeordnet sind und die Arbeitsplatte (12) in ihrer Neigung einstellbar ist und zum Zugang eines darunterliegenden Hohlraumes geöffnet werden kann und die Arbeitsplatte (12) mit Druckfedern zur Unterstützung des Öffnens beaufschlagt ist.

9. Arbeitsstehpult nach Anspruch 1,
**dadurch gekennzeichnet, daß**
an dem Untergestell eine die beiden Stützbeine (2a, 2b) verbindende Fußablage (14) angeordnet ist.

10. Arbeitsstehpult nach mindestens einem der voranstehenden Ansprüche,
**dadurch gekennzeichnet, daß**
auf den Ablageplatten (9) mindestens ein Computermonitor und/oder Drucker und in dem Kasten (13) mindestens ein Computer anordenbar ist.

## Claims

1. Standing desk consisting of an underframe with at least two supports (1a, 1b), with supporting legs (2a, 2b) arranged thereon and a working desktop (12) arranged on the underframe, where the supporting legs (2a, 2b) have accommodating fixtures (3) for locating means (4) of an adjustable skid (8) formed from at least two brackets (5, 6) and at least one body supporting element (7) for standing or knee support, and the brackets (5, 6) are formed as retractable and insertable telescopic rods with external component (5a, 6a) and internal component (5b, 6b), and the body supporting element (7) is arranged between the internal components (5b, 6b) of the brackets (5, 6).

2. Standing desk according to Claim 1,
wherein
the supports (1a, 1b) are hollow profiles, and at the supports (1a, 1b) there is/are arranged depositing boards (9) and/or at least one full-length shelf, and the depositing boards (9) and/or the shelf are secured by means of a socket mounting system.

3. Standing desk according to Claim 1,
wherein
the accommodating fixtures (3) are recesses and the body supporting element (7) is executed as a cushion roll and is completable with a removable back supporting bracket, where the body supporting element (7) is removable or tiltable and secured to the internal components (5b, 6b), and the internal components (5b, 6b) have an angular formation at their upper end.

4. Standing desk according to Claim 1,
wherein,
at the supports (1a, 1b), the supporting legs (2a, 2b) are arranged rigidly in the upper zone and the external components (5a, 6a) are arranged with angular adjustable movement in the lower zone and are arranged at the supporting legs (2a, 2b) as flat steel strips formed as anti-tilt strips (10a, 10b).

5. Standing desk according to Claim 3,
wherein
spring-loaded snap bolts (11) are arranged for locating the internal components (5b, 6b) at the external components (5a, 6a) and/or the body supporting element (7) at the internal components (5b, 6b).

6. Standing desk according to Claim 1,
wherein,
between the supporting legs (2a, 2b) or the supports (1a, 1b), a strut (15) is arranged and the working desktop (12) closes off, upwards, a trapezoidal-shaped box (13) and, on its side facing the supports (1a, 1b), is wider than on the side opposite the supports (1a, 1b).

7. Standing desk according to Claim 3,
wherein
the working desktop (12) has a concave shape out front at the side facing away from the supports (1a, 1b), this being in such a way that a bend-shaped recess is established.

8. Standing desk according to Claim 6,
wherein,
in and/or below the box (13), drawers are arranged and the working desktop (12) is adjustable in its inclination and can be opened for access to a hollow space located beneath it, and the working desktop (12) has pressure springs applied to it in order to support the opening movement.

9. Standing desk according to Claim 1,
wherein,
at the underframe, a foot rest (14) connecting the two supporting legs (2a, 2b) is arranged.

10. Standing desk according to at least one of the foregoing Claims,
wherein,
that on the depositing boards (9), at least one computer monitor and/or a printer can be arranged, and in the box (13) at least one computer can be arranged.

## Revendications

1. Pupitre de travail, se composant d'un châssis avec au moins deux montants (1a, 1b) auxquels des pieds de soutien (2a, 2b) sont ajoutés et d'une plaque de travail (12) placée sur le châssis, les pieds de soutien (2a, 2b) comprenant des dispositifs de réception (3) pour le système de blocage (4) d'un chariot (8) réglable se composant d'au moins deux étriers (5, 6) et d'au moins un élément d'appui corporel (7) pour s'appuyer en position debout ou avec les genoux, les étriers (5, 6) étant formés comme des tiges télescopiques que l'on peut étendre et raccourcir, avec l'élément extérieur (5a, 6a) et l'élément intérieur (5b, 6b), et l'élément d'appui corporel (7) étant placé entre les éléments intérieurs (5b, 6b) des étriers (5, 6).

2. Pupitre de travail selon la revendication 1,
**caractérisé en ce que**
les montants (1a, 1b) sont des profils creux, et des plateaux (9) et/ou au moins une étagère faisant la largeur sont placés sur les montants (1a, 1b), et la fixation des plateaux (9) et/ou de l'étagère a lieu au moyen d'un système à emboîtement.

3. Pupitre de travail selon la revendication 1,
**caractérisé en ce que**
les dispositifs de réception (3) sont des encoches, et l'élément d'appui corporel (7) est un coussin en forme de rouleau et peut être complété par un étrier amovible d'appui pour le dos, l'élément d'appui corporel (7) étant fixé aux éléments intérieurs (5b, 6b) de façon à pouvoir être ôté ou replié et les éléments intérieurs (5b, 6b) étant incurvés à leur extrémité supérieure.

4. Pupitre de travail selon la revendication 1,
**caractérisé en ce que**
les pieds de soutien (2a, 2b) dans la partie supérieure sont placés sur les montants (1a, 1b) de façon rigide et les éléments extérieurs (5a, 6a) dans la partie inférieure sont placés de façon à pouvoir être déplacés et ajustés, et des baguettes de sécurité en acier plat pour empêcher le renversement (10a, 10b) sont placées sur les pieds de soutien (2a, 2b).

5. Pupitre de travail selon la revendication 3,
**caractérisé en ce que**
des boulons à déclic (11) munis de ressorts sont placés sur les éléments extérieurs (5a, 6a) pour le blocage des éléments intérieurs (5b, 6b) et/ou sur les éléments intérieurs (5b, 6b) pour le blocage de l'élément d'appui corporel (7).

6. Pupitre de travail selon la revendication 1,
**caractérisé en ce qu'**
une entretoise transversale (15) est placée entre les pieds de soutien (2a, 2b) ou entre les montants (1a, 1b) et la plaque de travail (12) ferme par le dessus une caisse trapézoidale (13), cette plaque étant plus large sur le côté tourné vers les montants (1a, 1b) que sur le côté qui leur est opposé.

7. Pupitre de travail selon la revendication 3,
**caractérisé en ce que**
la plaque de travail (12) est concave sur le côté avant tourné dans la direction opposée aux montants (1a, 1b), de sorte à former un évidement courbe.

8. Pupitre de travail selon la revendication 6,
**caractérisé en ce que**
des tiroirs sont placés dans et/ou sous la caisse (13), et la pente de la plaque de travail (12) peut être ajustée et s'ouvrir pour accéder à l'espace se trouvant au-dessous, et la plaque de travail (12) est munie de ressorts de compression pour aider à l'ouverture.

9. Pupitre de travail selon la revendication 1,
**caractérisé en ce que**
un repose-pied (14) reliant les deux pieds de soutien (2a, 2b) est placé sur le châssis.

10. Pupitre de travail selon au moins une des revendications précédentes,
**caractérisé en ce que**
il est possible de placer au moins un écran d'ordinateur et/ou une imprimante sur les plateaux (9) et au moins un ordinateur dans la caisse (13).
